# EUROPEAN PATENT APPLICATION

(11) **EP 4 635 448 A1**
(43) Date of publication of application: **22.10.2025**
(21) Application number: 24818322.0
(22) Date of filing: 19.03.2024
(51) Int. Cl.: A61C 17/02, A61C 3/025

(54) **DENTAL AIR-ABRASION HANDLE CAPABLE OF ILLUMINATION**

(30) Priority: 07.06.2023 CN 202321446836 U
(71) Applicant: Guilin Woodpecker Medical Instrument Co., Ltd., Guilin, Guangxi 541004 (CN)
(72) Inventor: WU, Xunxian, Guilin, Guangxi 541004 (CN); ZHANG, Benqin, Guilin, Guangxi 541004 (CN); TANG, Peng, Guilin, Guangxi 541004 (CN); LI, Bo, Guilin, Guangxi 541004 (CN)
(74) Representative: Zenz Patentanwälte Partnerschaft mbB
(86) International application number: PCT/CN2024/082317
(87) International publication number: WO 2024/250785

(57) **Abstract**

The present application relates to the technical field of air-abrasion and scaling apparatuses, and particularly to a dental air-abrasion handle capable of illumination. The dental air-abrasion handle comprises a nozzle assembly, a middle assembly and a tail end assembly, which are sequentially connected, wherein a light-emitting element is provided in the nozzle assembly, the middle assembly and/or the tail end assembly, an optical propagation channel is provided on the nozzle assembly, the middle assembly and/or the tail end assembly, and a circuit connected to the light-emitting element is provided on the nozzle assembly, the middle assembly and/or the tail end assembly. Light from the light-emitting element is propagated directly or through the optical propagation channel, such that the dental air-abrasion handle has an illumination function. By means of the present utility model, during oral treatment and cleaning, a position needing to be scaled can be directly illuminated by a light source, and a better sight line is provided, thereby facilitating observation of the cleaning effect.

## Description

### TECHNICAL FIELD

The present application relates to the technical field of sandblasting and scaling apparatuses, and specifically to a dental sandblasting handpiece capable of illumination.

### BACKGROUND ART

Sandblasting and scaling achieve an effect of cleaning tooth surfaces by using compressed air to drive an sandblasting powder (with a main ingredient thereof usually being sodium bicarbonate, glycine or erythritol) to be ejected onto the tooth surfaces, and merging the sandblasting powder with a liquid medium (typically water) ejected together, so as to impact dental plaques, dental calculi, etc. on the tooth surfaces with a certain kinetic energy, thus being capable of effectively preventing periodontal diseases and maintaining dental health. Existing sandblasting handpieces lack an illumination function, which makes it impossible to obtain sufficient luminance during scaling of posterior teeth, and hinders treatment and cleaning of dentists. In the prior art, dentists usually rely on a dental chair light source, but an angle of the dental chair light source needs to be frequently adjusted, which is not convenient enough.

### SUMMARY

### TECHNICAL PROBLEMS

The present application aims at providing a dental sandblasting handpiece capable of illumination for the above problems. The dental sandblasting handpiece enables a light source to directly illuminate a position needing to be scaled during dental treatment and cleaning, and provides a better sight line, thereby facilitating observation of a cleaning effect.

### TECHNICAL SOLUTIONS

In order to achieve the above objective, technical solutions adopted in the present application are as follows.

Provided is a dental sandblasting handpiece capable of illumination, comprising a nozzle assembly, a middle assembly and a tail end assembly which are connected in sequence, wherein a light-emitting element is provided in the nozzle assembly, the middle assembly and/or the tail end assembly, an optical propagation channel is provided on the nozzle assembly, the middle assembly and/or the tail end assembly, a circuit (i.e., power cord) connected to the light-emitting element is provided on the nozzle assembly, the middle assembly and/or the tail end assembly, and light from the light-emitting element is propagated out directly or through the optical propagation channel, so as to enable the dental sandblasting handpiece to have an illumination function.

In the present application, further, a lower portion of the nozzle assembly is inserted into and detachably connected to the middle assembly, and the nozzle assembly and the middle assembly are further connected through a first positioning assembly; an upper portion of the tail end assembly is inserted into the middle assembly and sleeved on a lower end of the nozzle assembly, the tail end assembly is detachably connected to the middle assembly and the nozzle assembly, and the tail end assembly and the middle assembly are further connected through a second positioning assembly.

In the present application, further, the nozzle assembly comprises a tube core, a nozzle, a nozzle gas tube, a nozzle optical fiber, a nozzle connector and a docking tube, where the tube core is provided in an upper end of the nozzle and provided with spouts, the nozzle connector is connected to a lower end of the nozzle and connected to the middle assembly, one end of the docking tube is sleeved over a lower end of the nozzle connector, the nozzle gas tube and the nozzle optical fiber are both provided in the nozzle, and the nozzle gas tube further extends into the docking tube through the nozzle connector.

In the present application, further, the middle assembly comprises a handpiece shell, and a handpiece connector, a middle optical fiber, a support member, a water tube, a flow dividing tube and a locking ring which are fixedly provided in the handpiece shell, wherein the handpiece connector is hollow, the nozzle connector is inserted into a hollow portion of the handpiece connector, the middle optical fiber is connected to the nozzle optical fiber, the support member is supported and fixed between the handpiece connector and the flow dividing tube, an upper end of the water tube communicates with the hollow portion of the handpiece connector, the flow dividing tube communicates with a lower end of the water tube and is sleeved over an upper portion of the tail end assembly, and the locking ring is in contact with an end surface of the flow dividing tube and is connected to an inner wall of a lower end of the handpiece shell.

In the present application, further, the flow dividing tube or the locking ring is provided with an annular slot and a clamping slot, wherein the annular slot communicates with the water tube, and the clamping slot is detachably connected to the tail end assembly.

In the present application, further, the first positioning assembly comprises a bump and a recess mating with the bump, where the bump is provided on a side surface of the nozzle connector, and the recess is provided on the handpiece connector.

In the present application, further, the tail end assembly comprises a tail end case, a flow guide valve, a clamping ring, a fixing sleeve, a docking sleeve, a gas inlet tube, a water tube joint, a tail-end optical fiber, the light-emitting element, an adaptor, a magnetic element and a circuit board, where the flow guide valve is fixedly provided on the tail end case and inserted into the locking ring, and extends to the flow dividing tube to communicate with the flow dividing tube, the clamping ring is fixedly sleeved over the flow guide valve and is in mating connection with the clamping slot, the fixing sleeve is fixedly provided on the flow guide valve and inserted into a hollow portion of the handpiece shell, the docking sleeve is fixedly provided in the fixing sleeve and sleeved over the docking tube, the gas inlet tube is provided in the tail end case and extends into the docking sleeve through an interior of the flow guide valve, the water tube joint extends into the flow guide valve through the tail end case to communicate with the flow guide valve, the tail-end optical fiber is fixed in the flow guide valve and connected to the middle optical fiber, the light-emitting element is fixed in the tail end case by a light-emitting element fastener, the adaptor is located inside the tail end case and fixedly connected to a lower end of the flow guide valve, the magnetic element and the circuit board are fixedly mounted on the adaptor, and the circuit board is provided with a first electrode and a second electrode, wherein the first electrode and the second electrode are both electrically connected to the light-emitting element.

In the present application, further, the second positioning assembly comprises a positioning pin and a positioning hole mating with the positioning pin, where the positioning pin is provided on the flow guide valve, and the positioning hole is provided on the clamping slot in the middle assembly, so as to ensure a correct connection between the tail-end optical fiber and the middle optical fiber through the positioning pin and the positioning hole.

In the present application, further, the flow guide valve is further provided with a first through hole and a second through hole, and a gap is reserved between an outer wall of the gas inlet tube and an inner wall of the flow guide valve, wherein the first through hole is provided on a side of the flow guide valve facing the gas inlet tube, so as to enable water in the flow guide valve to flow through the first through hole into the gap between the flow guide valve and the gas inlet tube, and the second through hole is provided at a joint between the flow guide valve and the annular slot, so as to enable the water in the gap between the flow guide valve and the gas inlet tube to flow into the annular slot through the second through hole.

### BENEFICIAL EFFECTS

By providing the nozzle assembly, the middle assembly and the tail end assembly which are detachably connected, providing the light-emitting element in the tail end assembly, providing the nozzle optical fiber, the middle optical fiber and the tail-end optical fiber with light guiding and gathering functions respectively in the nozzle assembly, the middle assembly and the tail end assembly, further connecting the nozzle assembly and the middle assembly through the first positioning assembly, and further connecting the tail end assembly and the middle assembly through the second positioning assembly, the present application enables sequential connection between the nozzle optical fiber, the middle optical fiber and the tail-end optical fiber to form the optical propagation channel, with the connected end surfaces directly facing each other, efficiency of propagation of the light source is maximized, and finally, the present application enables the light source to directly illuminate the position needing to be scaled during dental treatment and cleaning, and provides the better line of sight, thus facilitating observation of the cleaning effect, and particularly during a surgical procedure in a posterior tooth region, operations are simpler and more convenient. In addition, the present application can also be used by dentists for illuminating gaps during dental cleaning, and using the light source for dental examination.

### BRIEF DESCRIPTION OF DRAWINGS

FIG. 1 is a structural schematic view of a dental sandblasting handpiece capable of illumination of the present application;
FIG. 2 is a first sectional view of a nozzle assembly in a dental sandblasting handpiece capable of illumination of the present application;
FIG. 3 is a partial enlarged view of part A in FIG 2;
FIG. 4 is a second sectional view of a nozzle assembly in a dental sandblasting handpiece capable of illumination of the present application;
FIG. 5 is a first sectional view of a middle assembly in a dental sandblasting handpiece capable of illumination of the present application;
FIG. 6 is a second sectional view of a middle assembly in a dental sandblasting handpiece capable of illumination of the present application;
FIG. 7 is a top view of a middle assembly in a dental sandblasting handpiece capable of illumination of the present application;
FIG. 8 is a first sectional view of a tail end assembly in a dental sandblasting handpiece capable of illumination of the present application; and
FIG. 9 is a second sectional view of a tail end assembly in the dental sandblasting handpiece capable of illumination of the present application.

Reference signs in drawings are as follows: 1-nozzle assembly, 11-tube core, 111-first spout, 112-second spout, 12-nozzle, 121-first channel, 122-second channel, 13-nozzle gas tube, 14-nozzle optical fiber, 15-nozzle connector, 151-water inlet hole, 152-bump, 16-docking tube, 17-annular sealing member, 2-middle assembly, 21-handpiece connector, 211-water outlet hole, 212-recess, 22-handpiece optical fiber, 23-handpiece shell, 24-support member, 25-water tube, 26-flow dividing tube, 261-annular slot, 262-positioning hole, 263-clamping slot, 27-locking ring, 3-tail end assembly, 301-fixing sleeve, 302-docking sleeve, 303-gas inlet tube, 304-flow guide valve, 3041-first through hole, 3042-second through hole, 305-positioning pin, 306-clamping ring, 307-tail-end optical fiber, 308-light-emitting element, 309-light-emitting element fastener, 310-adaptor, 311-magnetic element, 312-water tube joint, 313-circuit board, 314-first electrode, 315-second electrode, 316-tail end case.

### OPTIMAL EMBODIMENTS OF THE PRESENT APPLICATION

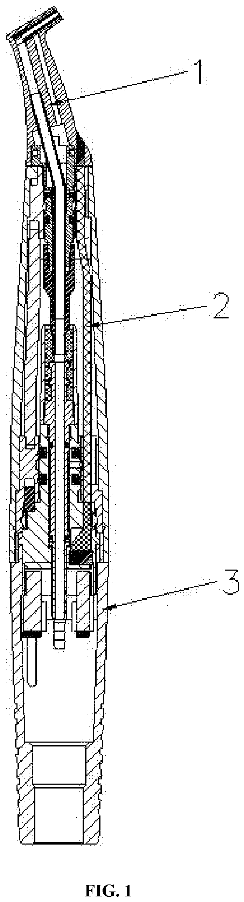

With reference to FIG. 1, a dental sandblasting handpiece capable of illumination comprises a nozzle assembly 1, a middle assembly 2 and a tail end assembly 3. A lower portion of the nozzle assembly 1 is inserted into and detachably connected to the middle assembly 2, and the nozzle assembly 1 and the middle assembly 2 are further connected through a first positioning assembly. An upper portion of the tail end assembly 3 is inserted into the middle assembly 2 and sleeved on a lower end of the nozzle assembly 1, the tail end assembly 3 is detachably connected to the middle assembly 2 and the nozzle assembly 1, and the tail end assembly 3 and the middle assembly 2 are further connected through a second positioning assembly. A light-emitting element 308 is further provided in the tail end assembly 3. An optical propagation channel is provided on the nozzle assembly 1, the middle assembly 2 and the tail end assembly 3, and light from the light-emitting element 308 is propagated via the optical propagation channel, so as to enable the dental sandblasting handpiece to have an illumination function. The light-emitting element 308 is provided with a power supply or a control signal by a handpiece tail circuit (including a water tube, a gas tube and a power supply signal line therein, and connecting the handpiece with a host) externally connected to the tail end assembly 3.

In the present embodiment, the light-emitting element 308 is an LED lamp, and the nozzle assembly 1, the middle assembly 2 and the tail end assembly 3 are respectively provided with a nozzle optical fiber 14, a middle optical fiber 22 and a tail-end optical fiber 307, wherein the nozzle optical fiber 14, the middle optical fiber 22 and the tail-end optical fiber 307 are all transparent light-guide elements, with light guiding and gathering functions. End surfaces of the tail-end optical fiber 307, the handpiece optical fiber 22 and the nozzle optical fiber 14 are opposite to each other, so as to form the optical propagation channel, thereby maximizing propagation efficiency of a light source.

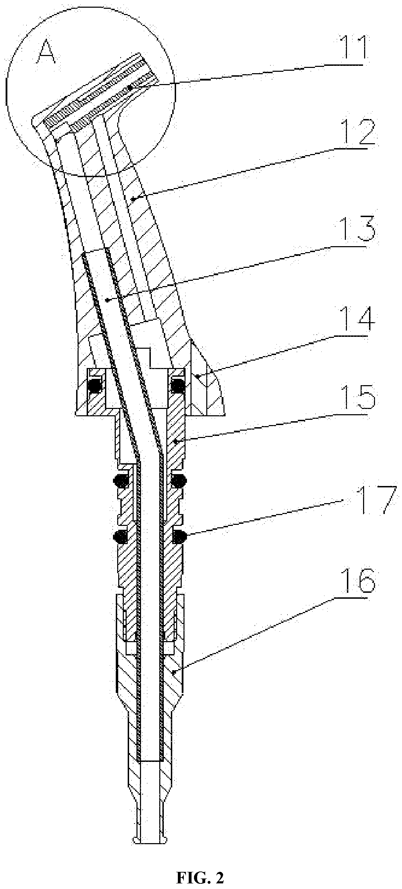

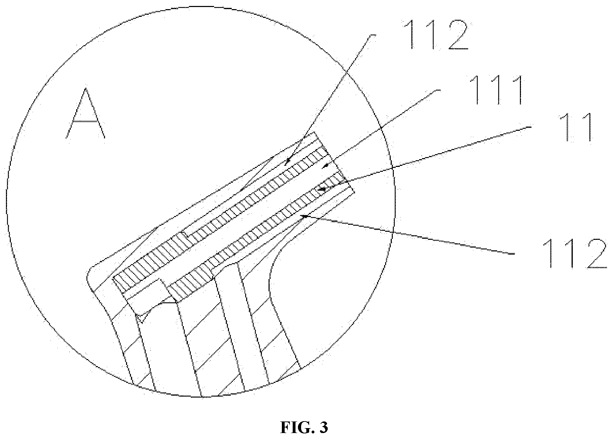

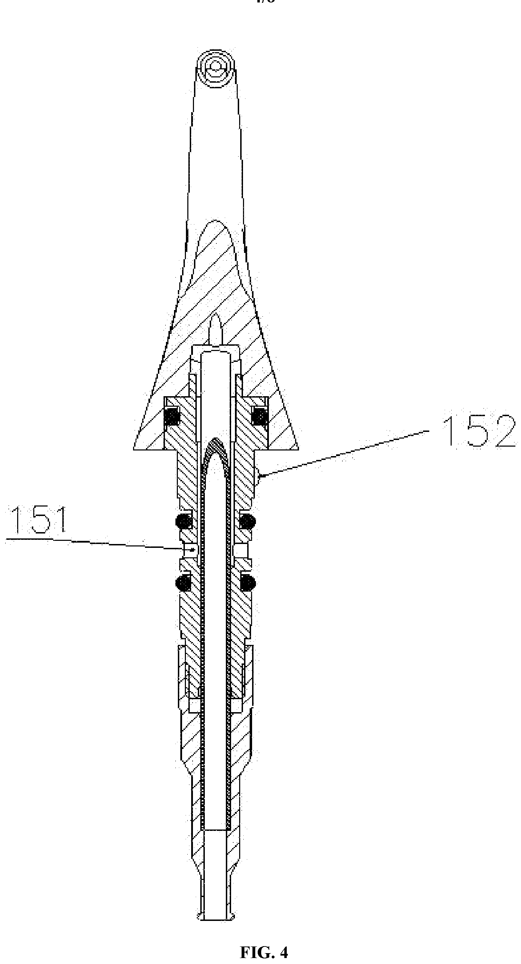

In the present embodiment, referring to FIG. 2 to FIG. 4 together, the nozzle assembly 1 comprises a tube core 11, a nozzle 12, a nozzle gas tube 13, a nozzle optical fiber 14, a nozzle connector 15 and a docking tube 16. The tube core 11 is provided in an upper end of the nozzle 12 and provided with spouts. The nozzle connector 15 is connected to a lower end of the nozzle 12 and connected to the middle assembly 2. The nozzle connector 15 is provided with a water inlet hole 151, and the nozzle connector 15 is further provided with annular sealing members 17 located above and below the water inlet hole 151, for sealing gaps between the nozzle connector 15 and a handpiece connector 21 of the middle assembly 2. One end of the docking tube 16 is sleeved over a lower end of the nozzle connector 15, and the nozzle gas tube 13 and the nozzle optical fiber 14 are both provided in the nozzle 12. Moreover, the nozzle gas tube 13 further extends into the docking tube 16 through the nozzle connector 15. A gap facilitating water circulation is further reserved between an outer wall of the nozzle gas tube 13 and an inner wall of the nozzle connector 15. Further specifically, the tube core 11 is provided with a first spout 111 located in a mid-portion of the tube core 11 and a second spout 112 located on an outer side of the tube core 11, where the first spout 111 communicates with a first channel 121 in the nozzle 12 provided with the nozzle gas tube 13, the second spout 112 communicates with a second channel 122 in the nozzle 12, and the second channel 122 communicates with the gap between the nozzle gas tube 13 and the nozzle connector 15. This configuration enables a mixed gas of high-pressure gas and an sandblasting powder to be ejected through the first spout 111 via the nozzle gas tube 13, and water to be ejected through the second channel 122 via the gap between the nozzle gas tube 13 and the nozzle connector 15, so that the tube core 11 achieves flow of gas inside the tube core 11 and flow of water outside the tube core 11, mixing and atomization are performed outside the nozzle, and the water ejected to the outside can also encapsulate the sandblasting powder, thereby preventing the sandblasting powder from scattering.

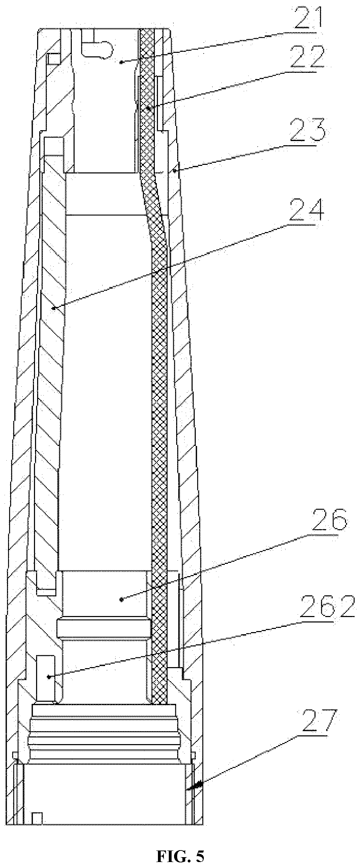

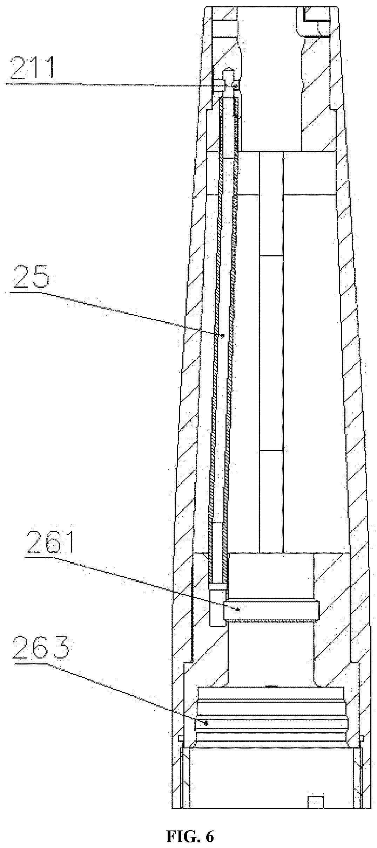

In the present embodiment, referring to FIG. 5 to FIG. 7 together, the middle assembly 2 comprises a handpiece shell 23, and a handpiece connector 21, a middle optical fiber 22, a support member 24, a water tube 25, a flow dividing tube 26 and a locking ring 27 which are fixedly provided in the handpiece shell 23. The handpiece shell 23 is provided with a boss 231 for fixing and positioning the handpiece connector 21. The handpiece connector 21 is hollow and provided with a water outlet hole 211. The nozzle connector 15 is inserted into a hollow portion of the handpiece connector 21. The middle optical fiber 22 is connected to the nozzle optical fiber 14. The support member 24 is supported and fixed between the handpiece connector 21 and the flow dividing tube 26. An upper end of the water tube 25 communicates with the hollow portion of the handpiece connector 21. The flow dividing tube 26 communicates with a lower end of the water tube 25 and is sleeved over an upper portion of the tail end assembly 3 (when the tail end assembly 3 is divided into the upper portion and a lower portion). The locking ring 27 is in contact with an end surface of a bottom end of the flow dividing tube 26 and is connected to an inner wall of a lower end of the handpiece shell 23, that is, the flow dividing tube 26 is in mating connection with an inner bore of the handpiece shell 27, and the locking ring 27 plays a role in ensuring axial fixation of the flow dividing tube 26. Further specifically, the flow dividing tube 26 is provided with an annular slot 261 and a clamping slot 263, where the annular slot 261 communicates with the water tube 25, and the clamping slot 263 is detachably connected to the tail end assembly 3. Certainly, in other embodiments, the annular slot 261 and the clamping slot 263 can also be provided on the locking ring 27.

In the present embodiment, specifically, the first positioning assembly comprises a bump 152 and a recess 212 mating with the bump 152, where the bump 152 is provided on a side surface of the nozzle connector 15, and the recess 212 is provided on the handpiece connector 21. When the bump 152 is screwed in place, an angle can be maintained with the middle assembly 2, thus ensuring alignment of the end surfaces of the handpiece optical fiber 22 and the nozzle optical fiber 14.

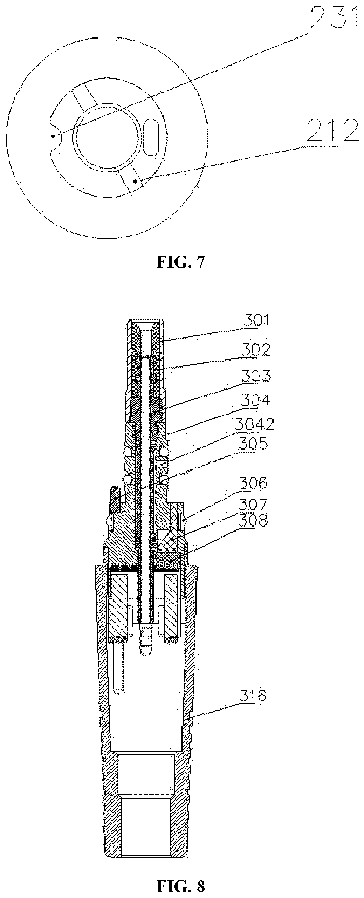

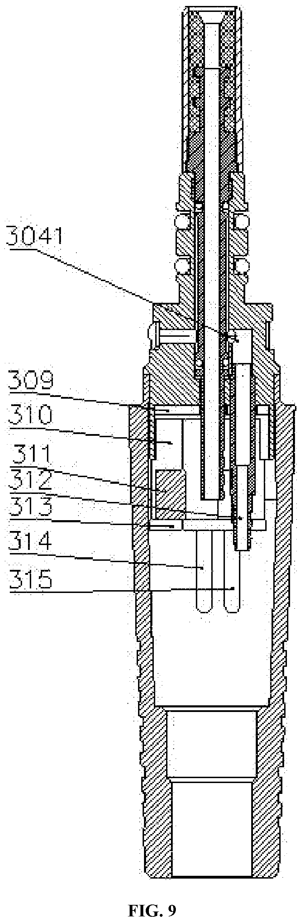

In the present embodiment, referring to FIG. 8 and FIG. 9 together, the tail end assembly 3 comprises a tail end case 316, a flow guide valve 304, a clamping ring 306, a fixing sleeve 301, a docking sleeve 302, a gas inlet tube 303, a water tube joint 312, a tail-end optical fiber 307, the light-emitting element 308, an adaptor 310, a magnetic element 311 and a circuit board 313. The flow guide valve 304 is fixedly provided on the tail end case 316 and inserted into the locking ring 27, and extends to the flow dividing tube 26 to communicate with the flow dividing tube 26. The clamping ring 306 is fixedly sleeved over the flow guide valve 304 and is in mating connection with the clamping slot 263, so as to enable detachable connection between the middle assembly 2 and the tail end assembly 3. The fixing sleeve 301 is fixedly provided on the flow guide valve 304 and inserted into a hollow portion of the handpiece shell 23. The docking sleeve 302 is fixedly provided in the fixing sleeve 301 and sleeved over the docking tube 16. The gas inlet tube 303 is provided in the tail end case 316, and extends into the docking sleeve 302 through an interior of the flow guide valve 304, and the gas inlet tube 303 is connected to a feed tube (external tubing) for feeding a mixed fluid of the high-pressure gas and the sandblasting powder. The water tube joint 312 extends into the flow guide valve 304 through the tail end case 316 to communicate with the flow guide valve 304, and the tail-end optical fiber 307 is fixed in the flow guide valve 304 and connected to the middle optical fiber 22. Specifically, the flow guide valve 304 is provided with a receiving hole mating with the tail-end optical fiber 307 in shape, so that the tail-end optical fiber 307 can be fixed on the flow guide valve 304 by means of gluing or the like. The light-emitting element 308 is fixed in the tail end case 316 by a light-emitting element fastener 309 fixed in the tail end case 316. The adaptor 310 is located inside the tail end case 316 and fixedly connected to a lower end of the flow guide valve 304. The magnetic element 311 and the circuit board 313 are fixedly mounted on the adaptor 310. The circuit board 313 is provided with a first electrode 314 and a second electrode 315, wherein the first electrode 314 and the second electrode 315 are both electrically connected to the light-emitting element 308. In the present embodiment, the magnetic element 311 is a magnet, and the host connected to the handpiece comprises therein a sensor that senses magnetism and is used for determining whether the handpiece is picked up.

Further specifically, the flow guide valve 304 is further provided with a first through hole 3041 and a second through hole 3042. A gap is reserved between an outer wall of the gas inlet tube 303 and an inner wall of the flow guide valve 304. The first through hole 3041 is provided on a side of the flow guide valve 304 facing the gas inlet tube 303, so as to enable water in the flow guide valve 304 to flow through the first through hole 3041 into the gap between the flow guide valve 304 and the gas inlet tube 303; and the second through hole 3042 is provided at a joint between the flow guide valve 304 and the annular slot 261, so as to enable the water in the gap between the flow guide valve 304 and the gas inlet tube 303 to flow into the annular slot 261 through the second through hole 3042.

In the present embodiment, specifically, the second positioning assembly comprises a positioning pin 305 and a positioning hole 262 mating with the positioning pin 305, wherein the positioning pin 305 is provided on the flow guide valve 304, and the positioning hole 262 is provided on the clamping slot 263 in the middle assembly 2, so as to ensure a correct connection between the tail-end optical fiber 307 and the middle optical fiber 22 through the positioning pin 305 and the positioning hole 262.

It can be understood that in other embodiments, it is also feasible that the light-emitting element is provided in the nozzle assembly 1 or the middle assembly 2. When the light-emitting element is provided in the nozzle assembly 1, there is no need to provide the optical propagation channel formed by the optical fiber, and the light from the light-emitting element is directly propagated for dental treatment and cleaning. When the light-emitting element is provided in the middle assembly 2, it only needs to provide the optical propagation channel formed by the optical fiber in the nozzle assembly 1 and the middle assembly 2.

The present application operates according to a principle as follows: a gas-abrasive mixture of the high-pressure gas and the sandblasting powder fed through the external tubing enters the nozzle gas tube 13 through the gas inlet tube 303, and finally flows out of the first spout 111 of the tube core 11, to be mixed with water in front of the first spout 111; water enters the flow guide valve 304 from the water tube joint 312, and flows from the first through hole 3041 between the flow guide valve 304 and the gas inlet tube 303, then flows out of the second through hole 3042 to the annular slot 261 of the middle assembly, then enters the water tube 25, and then flows out of the water tube 25 into the handpiece connector 21, flows out of the water outlet hole 211 of the handpiece connector 21 into the gap between the nozzle gas tube 13 and the nozzle connector 15 via the water inlet hole 151 of the nozzle connector 15 (herein, the annular sealing members 17 can ensure entry of water into the gap from the water outlet hole 211 via the water inlet hole 151), and finally flows out of the second spout 112 of the tube core 11, to be mixed with the gas-abrasive mixture coming out of the nozzle gas tube 13, where a mixing position is a position spaced 3-5 mm away from a front end of the first spout 111. Moreover, the light from the light-emitting element 308 in the tail end assembly 3 is transmitted from the tail-end optical fiber 307 to the nozzle optical fiber 14 in the nozzle assembly 1 via the middle optical fiber 22 of the middle assembly 2, and exits from the nozzle optical fiber 14, so as to enable the dental sandblasting handpiece to have the illumination function.

### EMBODIMENTS OF THE PRESENT APPLICATION

They are the same as OPTIMAL EMBODIMENTS.

### INDUSTRIAL APPLICABILITY

By providing the nozzle assembly 1, the middle assembly 2 and the tail end assembly 3 which are detachably connected, providing the light-emitting element 308 in the tail end assembly 3, providing the nozzle optical fiber 14, the middle optical fiber 22 and the tail-end optical fiber 307 with the light guiding and gathering functions respectively in the nozzle assembly 1, the middle assembly 2 and the tail end assembly 3, further connecting the nozzle assembly 1 and the middle assembly 2 through the first positioning assembly, and further connecting the tail end assembly 3 and the middle assembly 2 through the second positioning assembly, the present application enables sequential connection between the nozzle optical fiber 14, the middle optical fiber 22 and the tail-end optical fiber 307 to form the optical propagation channel, with the connected end surfaces directly facing each other, efficiency of propagation of the light source is maximized, and finally, the present application enables the light source to directly illuminate the position needing to be scaled during dental treatment and cleaning, and provides a better sight line, thus facilitating observation of a cleaning effect, and particularly during a surgical procedure in a posterior tooth region, operations are simpler and more convenient. In addition, the present application can also be used by dentists for illuminating gaps during dental cleaning, and using the light source for dental examination.

### SEQUENCE LISTING FREE TEXT

None.

## Claims

1. A dental sandblasting handpiece capable of illumination, **characterized by** comprising a nozzle assembly, a middle assembly and a tail end assembly which are connected in sequence, wherein a light-emitting element is provided in the nozzle assembly, the middle assembly and/or the tail end assembly, an optical propagation channel is provided on the nozzle assembly, the middle assembly and/or the tail end assembly, a circuit connected to the light-emitting element is provided on the nozzle assembly, the middle assembly and/or the tail end assembly, and light from the light-emitting element is propagated out directly or through the optical propagation channel, so as to enable the dental sandblasting handpiece to have an illumination function.

2. The dental sandblasting handpiece capable of illumination according to claim 1, **characterized in that** a lower portion of the nozzle assembly is inserted into and detachably connected to the middle assembly, and the nozzle assembly and the middle assembly are further connected through a first positioning assembly; an upper portion of the tail end assembly is inserted into the middle assembly and sleeved on a lower end of the nozzle assembly, the tail end assembly is detachably connected to the middle assembly and the nozzle assembly, and the tail end assembly and the middle assembly are further connected through a second positioning assembly.

3. The dental sandblasting handpiece capable of illumination according to claim 2, **characterized in that** the nozzle assembly comprises a tube core, a nozzle, a nozzle gas tube, a nozzle optical fiber, a nozzle connector and a docking tube, wherein the tube core is provided in an upper end of the nozzle and provided with spouts, the nozzle connector is connected to a lower end of the nozzle and connected to the middle assembly, one end of the docking tube is sleeved over a lower end of the nozzle connector, the nozzle gas tube and the nozzle optical fiber are both provided in the nozzle, and the nozzle gas tube further extends into the docking tube through the nozzle connector.

4. The dental sandblasting handpiece capable of illumination according to claim 3, **characterized in that** the middle assembly comprises a handpiece shell, and a handpiece connector, a middle optical fiber, a support member, a water tube, a flow dividing tube and a locking ring which are fixedly provided in the handpiece shell, wherein the handpiece connector is hollow, the nozzle connector is inserted into a hollow portion of the handpiece connector, the middle optical fiber is connected to the nozzle optical fiber, the support member is supported and fixed between the handpiece connector and the flow dividing tube, an upper end of the water tube communicates with the hollow portion of the handpiece connector, the flow dividing tube communicates with a lower end of the water tube and is sleeved over an upper portion of the tail end assembly, and the locking ring is in contact with an end surface of the flow dividing tube and is connected to an inner wall of a lower end of the handpiece shell.

5. The dental sandblasting handpiece capable of illumination according to claim 4, **characterized in that** the flow dividing tube or the locking ring is provided with an annular slot and a clamping slot, wherein the annular slot communicates with the water tube, and the clamping slot is detachably connected to the tail end assembly.

6. The dental sandblasting handpiece capable of illumination according to claim 5, **characterized in that** the first positioning assembly comprises a bump and a recess mating with the bump, wherein the bump is provided on a side surface of the nozzle connector, and the recess is provided on the handpiece connector.

7. The dental sandblasting handpiece capable of illumination according to claim 5, **characterized in that** the tail end assembly comprises a tail end case, a flow guide valve, a clamping ring, a fixing sleeve, a docking sleeve, a gas inlet tube, a water tube joint, a tail-end optical fiber, the light-emitting element, an adaptor, a magnetic element and a circuit board, wherein the flow guide valve is fixedly provided on the tail end case and inserted into the locking ring, and extends to the flow dividing tube to communicate with the flow dividing tube, the clamping ring is fixedly sleeved over the flow guide valve and is in mating connection with the clamping slot, the fixing sleeve is fixedly provided on the flow guide valve and inserted into a hollow portion of the handpiece shell, the docking sleeve is fixedly provided in the fixing sleeve and sleeved over the docking tube, the gas inlet tube is provided in the tail end case and extends into the docking sleeve through an interior of the flow guide valve, the water tube joint extends into the flow guide valve through the tail end case to communicate with the flow guide valve, the tail-end optical fiber is fixed in the flow guide valve and connected to the middle optical fiber, the light-emitting element is fixed in the tail end case by a light-emitting element fastener, the adaptor is located inside the tail end case and fixedly connected to a lower end of the flow guide valve, the magnetic element and the circuit board are fixedly mounted on the adaptor, and the circuit board is provided with a first electrode and a second electrode, wherein the first electrode and the second electrode are both electrically connected to the light-emitting element.

8. The dental sandblasting handpiece capable of illumination according to claim 7, **characterized in that** the second positioning assembly comprises a positioning pin and a positioning hole mating with the positioning pin, wherein the positioning pin is provided on the flow guide valve, and the positioning hole is provided on the clamping slot in the middle assembly, so as to ensure a correct connection between the tail-end optical fiber and the middle optical fiber through the positioning pin and the positioning hole.

9. The dental sandblasting handpiece capable of illumination according to claim 7, **characterized in that** the flow guide valve is provided with a first through hole and a second through hole, and a gap is reserved between an outer wall of the gas inlet tube and an inner wall of the flow guide valve, wherein the first through hole is provided on a side of the flow guide valve facing the gas inlet tube, so as to enable water in the flow guide valve to flow through the first through hole into the gap between the flow guide valve and the gas inlet tube, and the second through hole is provided at a joint between the flow guide valve and the annular slot, so as to enable the water in the gap between the flow guide valve and the gas inlet tube to flow into the annular slot through the second through hole.
